Europäisches Patentamt

European Patent Office

Office européen des brevets

(19)

(11) Veröffentlichungsnummer: **0 007 391 B1**

(12) **EUROPÄISCHE PATENTSCHRIFT**

(45) Veröffentlichungstag der Patentschrift:
05.05.82

(21) Anmeldenummer: 79101398.0

(22) Anmeldetag: 08.05.79

(51) Int. Cl.³: **C 08 L 33/00**, C 09 D 3/80, C 08 J 3/12

(54) Kunststoffpulver für Beschichtungsmittel, sowie Beschichtungsmittel und-Verfahren für Weich-PVC.

(30) Priorität: 31.07.78 DE 2833601

(43) Veröffentlichungstag der Anmeldung:
06.02.80 Patentblatt 80/3

(45) Bekanntmachung des Hinweises auf die Patenterteilung:
05.05.82 Patentblatt 82/18

(84) Benannte Vertragsstaaten:
BE CH DE FR GB IT NL SE

(56) Entgegenhaltungen:
DE-B-1 297 266
FR-A-2 391 245
GB-A-743 181
US-A-3 219 610
US-A-3 876 578

(73) Patentinhaber: Röhm GmbH, Kirschenallee
Postfach 4242, D-6100 Darmstadt 1 (DE)

(72) Erfinder: Fink, Herbert, Dr., Berlinerstrasse 24,
D-6101 Bickenbach (DE)
Erfinder: Sütterlin, Norbert, Dr.Dipl.-Chem, Am Horeth 23,
D-6105 Ober-Ramstadt (DE)
Erfinder: Dinklage, Horst, Am Schlangensee 93,
6110 Dieburg (DE)
Erfinder: Tilch, Willi, Wilhelmstrasse 63, D-6107 Reinheim
(DE)

Kunststoffpulver für Beschichtungsmittel, sowie Beschichtungsmittel und -Verfahren für PVC

Die Erfindung betrifft pulverförmige Kunststoffe, die als Zusatz zu Beschichtungsmitteln für die Herstellung glänzender, nichtblockender, elastischer Überzüge geeignet sind. Elastische Überzüge werden auf weichen oder biegsamen Substraten, z.B. Kunstleder, oder wenn sie eine gute Beständigkeit gegen Schlagbeanspruchungen aufweisen sollen, gegebenenfalls auch auf harten Substraten aufgebracht. Der Nachteil derartiger Überzüge besteht häufig darin, dass zwei damit überzogene Flächen bei Berührung aneinander haften und sich nur schwer gegeneinander verschieben lassen. Dieses Verhalten wird als «Blokken» bezeichnet.

Ein gebräuchliches Mittel zur Verhinderung des Blockens besteht in dem Zusatz von feinteiliger Kieselsäure zu der Beschichtungsmischung. Obwohl damit gute Gleiteigenschaften der beschichteten Substrate erreicht werden, ist der Zusatz von Kieselsäure unerwünscht, wenn glänzende Überzüge erzeugt werden sollen, denn dieser Zusatz bewirkt eine Mattierung der Oberfläche. Setzt man die Zusatzmenge soweit herab, dass glänzende Überzüge entstehen, so sind sie nicht hinreichend gleitfähig. Die gleichen Nachteile gelten für eine Vielzahl von Kunststoffpulvern, die anstelle von Kieselsäure als Zusatz zu Überzugsmitteln vorgeschlagen worden sind. Gemäss DE-A 1 297 266 führt der Zusatz von Polyesterpartikeln zu einem filmbildenden Beschichtungsmaterial zur Ausbildung matter Überzüge.

Nach der Lehre der GB-A 734 181 werden Dispersionen von Polyvinylidenchlorid mit Polyvinylchlorid-Pulvern mit einer Teilchengrösse von weniger als 10 µm versetzt und ergeben nichtblokkende Überzüge. Die Wirkung des zugesetzten Kunststoffpulvers geht jedoch wieder verloren, wenn der Überzug auf einem heissen Prägekalander nachbehandelt wird. Weiterhin ist das Polyvinylchloridpulver nicht als blockfest machender Zusatz für Lösungen von Überzugsmitteln in organischen Lösungsmitteln geeignet, weil sich dann auch das Polyvinylchlorid auflöst.

In der US-A 3 876 578 werden als blockfest und gleitfähig machende Zusätze für wässrige Überzugsmitteldispersionen vernetzte Kunststoffpulver mit einer Teilchengrösse nicht über 5 µm vorgeschlagen. Durch die Vernetzung sind die Kunststoffpulver auch gegen eine Nachbehandlung auf einem heissen Prägekalander beständig und in organischen Lösungsmitteln unlöslich. Sie können aus verschiedenen Monomeren aufgebaut sein, z.B. niederen Alkylacrylaten oder niederen Alkylmethacrylaten. Vorzugsweise werden vernetzte Polystyrol- oder Polymethylmethacrylat-Pulver eingesetzt.

Obwohl mit diesen Zusätzen Blockfreiheit und gute Gleiteigenschaften erreichbar sind, ist der Glanz der Überzüge nicht voll befriedigend. Ein verbesserter Glanz kann nur durch Verminderung der Zusatzmengen gegen erhöhte Blockungsneigung und schlechtere Gleitfähigkeit erkauft werden. Es bestand daher die Aufgabe, Kunststoffpulver als Zusatz für Beschichtungsmittel zu finden, die die Herstellung glänzender, nichtblockender Überzüge mit guten Gleiteigenschaften gestatten.

Die Kunststoffpulver gemäss Anspruch 1 erfüllen diese Forderung. Sie bestehen aus Latexpartikeln mit einer mittleren Teilchengrösse zwischen 1 und 5 µm, die teilweise oder vollständig zu grösseren Partikeln locker aggregiert sein können, bestehend aus einem vernetzten Mischpolymerisat aus 75 bis 99,5 Gew.-% eines Monomerengemisches aus Methyl- und Isobutylmethacrylat im Gewichtsverhältnis 1 : 3 bis 3 : 1, 0,5 bis 10 Gew.-% eines vernetzenden Comonomeren mit wenigstens zwei polymerisierbaren Doppelbindungen und gegebenenfalls einem weiteren Comonomeren. Ihre Wirkung dürfte ebenso wie die bekannter pulverförmiger Zusätze zu Überzugsmitteln darauf beruhen, dass die Pulverpartikel als kleine Erhebungen über die Oberfläche der Beschichtung hinausragen und einen innigen Kontakt zweier einander berührender Oberflächen verhindern. Derartige Erhebungen beeinträchtigen den Oberflächenglanz. Die Verminderung des Blockens und die Verbesserung der Gleitfähigkeit dürfte daher grundsätzlich mit einer gewissen Beeinträchtigung des Glanzes einhergehen. Es war nicht vorherzusehen, dass gerade die erfindungsgemässen, aus Methyl- und Isobutylmethacrylat aufgebauten Kunststoffpulver einen besonders vorteilhaften Kompromiss zwischen hohem Glanz einerseits und guter Blockfestigkeit und Gleitfähigkeit andererseits erreichen lassen würden.

Die vorteilhafte Wirkung der erfindungsgemässen Pulver ist wesentlich an die Einhaltung der beanspruchten Grenzen der Teilchengrösse gebunden. Die Teilchengrösse wird am lichtmikroskopischen Bild ermittelt. Der bevorzugte Teilchengrössenbereich liegt bei 1,5 bis 3 µm. Eine hohe Einheitlichkeit der Teilchengrösse gestattet die Verwendung relativ geringer Zusatzmittelmengen, wodurch die Beeinträchtigung des Glanzes besonders gering gehalten werden kann. Pulver mit weniger als 10% Primärlatexpartikeln. oberhalb und unterhalb der Teilchengrösse von 1 bis 5 µm sind daher besonders bevorzugt.

Im Regelfall sind die vernetzten Polymerisatpulver allein aus Methyl- und Isobutylmethacrylat sowie einem Vernetzungsmittel aufgebaut. Als Vernetzungsmittel eignen sich in bekannter Weise Verbindungen mit wenigstens zwei Kohlenstoff-Doppelbindungen, die mit den genannten Methacrylestern mischpolymerisierbar sind. Gebräuchliche Vernetzungsmittel dieser Art sind Dimethacrylate oder Diacrylate von Äthylenglykol, Propylenglykol, Butandiol-1,4 oder Diglykoläther und andere zwei- oder mehrfunktionelle Ester von Di- oder Polyhydroxyverbindungen, sowie Divinylbenzol oder Divinylester von organischen Dicarbonsäuren. Für die Anwendung der Pulver in wässrigen Überzugsmitteldispersionen, insbesondere, wenn keine Heisskalandrierung der Beschichtung vorgesehen ist, genügen geringe Vernetzungsmittelmengen, während für die Anwendung in organischen Überzugsmittellösungen sowie in heisskalandrierbaren Überzügen stärker vernetzte Kunststoffpulver mit vorzugsweise 3 bis 10 Gew.-% des vernetzenden Comonomeren angebracht sind.

Die vorteilhaften Eigenschaften der neuen Kunststoffpulver kommen auch dann noch zum Tragen, wenn das Gemisch aus Methyl- und Isobutylmethacrylat nur zu mindestens 75 Gew.-% an ihrem Aufbau beteiligt ist und der verbleibende Teil neben dem vernetzenden Monomeren aus einem anderen Comonomeren gebildet wird. Das Comonomere soll so gewählt sein, dass es die Eigenschaften des Pulvers nicht nachteilig beeinflusst. Verwendbar sind. z.B. andere Ester der Acryl- und Methacrylsäure, Styrol, Acryl- und Methacrylnitril, Vinylacetat, Vinylpropionat, und Vinylbutyrat oder ähnliche, vorzugsweise nicht oder nur wenig wasserlösliche Monomere.

Es ist vorteilhaft, wenn die Pulverpartikel kugelförmig sind. Sie werden zweckmässig nach dem sogenannten Saatlatex-Verfahren durch Emulsionspolymerisation hergestellt und durch Sprühtrocknung unter Bedingungen, unter denen die Einzelpartikel nicht miteinander verschmelzen zu einem Pulver getrocknet. Dabei aggregieren sie in der Regel zu grösseren Partikeln, worin die primären Latexpartikel jedoch nur so locker zusammenhängen, dass sie sich beim Einrühren in das flüssige Beschichtungsmittel wieder zu Einzelpartikeln zerteilen.

Die erfindungsgemässen Pulver werden vorzugsweise in nichtpigmentierten, klare Filme ergebenden Überzugsmitteln verteilt. Zweckmässige Zusatzmengen liegen zwischen 2 und 50, vorzugsweise 10 bis 30 Gew.-%, bezogen auf das Gewicht des Bindemittels. Die Beschichtungsmittel enthalten grundsätzlich eine flüchtige flüssige Komponente. Der Bindemittelanteil kann z.B. 5 bis 60 Gew.-% des gesamten Beschichtungsmittels ausmachen.

Typische Bindemittel in Form von Lösungen sind Acrylharze, Polyvinylchlorid, Polyurethane, Polyamide oder Celluloseester, wie Celluloseacetobutyrat, wobei das Bindemittel in Form einer Lösung in der flüssigen Komponente vorliegt und die Latexpartikel in der Lösung verteilt sind. Als Bindemittel in Dispersionsform kommen z.B. Polyvinylacetat, Polyvinylchlorid, Polyvinylidenchlorid, Polyacrylate, Styrol-Acrylat-Mischpolymerisate oder Mischpolymerisate aus Butadien mit Styrol oder Acrylnitril in Betracht. In diesem Falle besteht die erforderliche flüssige Komponente des Bindemittels aus Wasser und das Bindemittel ist ein darin dispergiertes Emulsionspolymerisat.

Besonders vorteilhaft ist die Verwendung von Acrylharzen, gegebenenfalls in Kombination mit Polyvinylchlorid, als Bindemittel. Unter Acrylharzen werden Polymerisate oder Mischpolymerisate verstanden, die zu wenigstens 80 Gew.-% aus Estern der Acryl- oder Methacrylsäure von $C_1$- bis $C_8$-Alkoholen aufgebaut sind. Die qualitative und quantitative Zusammensetzung der Acrylharze richtet sich in bekannter Weise nach der Fähigkeit der genannten Ester, dem Polymerisat Härte oder Dehnbarkeit zu verleihen. Das Bindemittel kann in Form einer wässrigen Dispersion mit beispielsweise 10 bis 60 Gew.-% Feststoffgehalt vorliegen. Die mittlere Teilchengrösse der Dispersion soll, um einen hohen Glanz zu erzielen, nicht über 0,3 µm liegen. Die Dispersionen enthalten übliche Emulgiermittel, die gleichzeitig die Dispergierung des zugesetzten Kunststoffpulvers bewirken.

Vorzugsweise werden organische Bindemittellösungen, insbesondere mit einem Feststoffgehalt von 5 bis 40 Gew.-% eingesetzt. Für Acrylharzbindemittel eignen sich z.B. Chlorkohlenwasserstoffe, aromatische Kohlenwasserstoffe, flüchtige Ester oder Ketone als Lösungsmittel. Die Viskosität der Bindemittellösungen liegt zweckmässig im Bereich von 10 bis 50 000 mPa.s da in diesem Bereich günstige Verarbeitungsbedingungen für die meisten Beschichtungsverfahren gegeben sind und das zugesetzte Kunststoffpulver nur eine geringe Neigung zum Absetzen hat.

Beschichtungsmittel mit einem Gehalt an dem erfindungsgemässen Pulver können nach allen üblichen Beschichtungsverfahren auf Substrate aufgebracht werden, beispielsweise durch Versprühen mit oder ohne Luft, Streichen, Drucken, Giessen oder Tauchen. Die Überzugsmittelmenge wird so dosiert dass nach dem Verdampfen der flüssigen Komponente ein geschlossener Film der gewünschten Dicke zurückbleibt. Die Trocknung kann ohne Beeinträchtigung der Filmeigenschaften bei erhöhter Temperatur, beispielsweise zwischen 60 und 180°C durchgeführt werden. Anschliessend kann die Beschichtung mit einem Glätt- oder Prägekalander oder auf andere Weise nachbehandelt werden.

Die Beschichtungen können auf Substrate aller Art aufgetragen werden, z.B. auf Metalle, Kunststoffe in Form von Folien, Platten oder Formteilen, Holz, Asbestzement, Glas oder keramisches Material. Vorzugsweise dienen sie zur Beschichtung von biegsamen Substraten, wie Kunstleder, Leder, Kunststoff-Planen, Kunststoff-Folien, Papier, Pappe oder Textilgewebe. Als besonders vorteilhaft haben sich die erfindungsgemässen Pulver in Überzügen auf weichmacherhaltigen Kunststoffen, insbesondere Weich-PVC erwiesen. Überzüge auf diesen Substraten haben eine erhöhte Neigung, klebrig zu werden, was auf eine Auswanderung des Weichmachers in die Überzugsschicht zurückzuführen ist. Die erfindungsgemässen Pulver nehmen die für PVC üblichen Weichmacher praktisch nicht auf und behalten ihre günstigen Eigenschaften zeitlich unbegrenzt bei. Aus diesem Grunde bilden Überzugsmittel auf Acrylharzbasis mit einem Gehalt der erfindungsgemässen Pulver als Schlusslack für weichmacherhaltige PVC-Beschichtungen, wie PVC-Kunstleder und PVC-Planen, eine besonders bevorzugte Anwendungsform der Erfindung.

Bei den folgenden Mengenangaben (Teile, Prozent) in den Beispielen handelt es sich durchweg um Gewichtsteile bzw. Gewichtsprozent.

Beispiel 1
Polymerisation
1.1 Vernetztes Polystyrol
1. Stufe

In einer heizbaren Polymerisationsapparatur, bestehend aus 2 l Wittschen Topf mit Blattrührer und Thermometer, werden 1200 Teile vollentsalztes Wasser vorgelegt und auf 80°C erhitzt. Anschliessend werden 6,0 Teile Ammoniumperoxidisulfat und 5 Teile einer Mischung, bestehend aus 95 Gew.-% Styrol und 5 Gew.-% Glykoldimethacrylat zugegeben. Nach 5 Min. werden innerhalb 1 Std. die restlichen 295 Teile der Mischung aus 95 Gew.-% Styrol und 5 Gew.-% Glykoldimethacrylat zugetropft. Nach Ende des Zulaufs wird 60 Min. bei 80°C gerührt, dann abgekühlt und über ein VA-Siebgewebe abfiltriert.

Die erhaltene Dispersion ist frei von Koagulat und hat einen Feststoffgehalt von 19 bis 20 Gew.-%. Der mittlere Teilchendurchmesser beträgt ca. 0,65–0,7 μm.

2. Stufe

In einer Polymerisationsapparatur (analog Stufe 1) werden 280 Teile vollentsalztes Wasser und 45,0 Teile der oben beschriebenen Dispersion (Stufe 1) vorgelegt und auf 80°C erhitzt. Anschliessend werden 0,18 Teile Ammoniumperoxidsulfat zugegeben und eine Emulsion, bestehend aus 454 Teilen Styrol, 23,8 Teilen Glykoldimethacrylat, 800 Teilen vollentsalztem Wasser, 0,68 Teilen Natriumlaurylsulfat und 1,6 Teilen Ammoniumperoxidisulfat während 4 Std. zugetropft. Nach Zulaufende wird 1 Std. und nach Zugabe von 0,45 Teilen Ammoniumperoxidisulfat eine weitere Stunde bei 80°C endpolymerisiert. Die erhaltene Dispersion ist koagulatfrei und hat einen Feststoffgehalt von 29 bis 30%. Der mittlere Teilchendurchmesser beträgt 2,0 bis 2,5 μm.

1.2 Vernetztes Polymethylmethacrylat

Es wird verfahren wie in Beispiel 1.1, nur dass in beiden Stufen anstelle von Styrol die gleiche Menge Methacrylsäuremethylester verwendet wird. Die erhaltene Dispersion enthält in der 2. Stufe ca 1% Koagulat und hat einen Feststoffgehalt von 29 bis 30%. Der mittlere Teilchendurchmesser beträgt ca. 2,0 μm.

1.3 Vernetztes Copolymerisat aus Polymethylmethacrylat/Isobutylmethacrylat

Es wird verfahren wie in Beispiel 1.1, nur dass anstelle von Styrol die gleiche Menge einer Mischung aus Methacrylsäuremethylester und Methacrylsäureisobutylester im Verhältnis 1/1 verwendet wird.

Man erhält koagulatfreie Dispersion von 29 bis 30% Feststoffgehalt. Der mittlere Teilchendurchmesser beträgt ca. 2,0 bis 3,0 μm.

Beispiel 2
Anwendungstechnische Prüfung
Versuch 1

Ein Weich-PVC-Schaumkunstleder wurde mit einer 10%igen Lösung folgender Zusammensetzung schlusslackiert:

100 Gew.-Teile eines Copolymerisates aus 47 Teilen Methylmethacrylat, 47 Teilen n-Butylmethacrylat und 6 Teilen Hydroxyäthylacrylat
150 Gew.-Teile Butylacetat
290 Gew.-Teile Methyläthylketon
170 Gew.-Teile Toluol
280 Gew.-Teile Äthylacetat
10 Gew.-Teile polyfunktionelles aromatisches Isocyanat, 75%ige Lösung in Äthylacetat (Handelsprodukt DESMODUR L® der Fa. Bayer AG).

Der Auftrag erfolgte mittels einer Spiralrakel; getrocknet wurde 5 Min. bei 100°C. Die Auflage an Trockensubstanz betrug 8 g/m².

Versuch 2–4

Versuch 1 wurde wiederholt mit dem Unterschied, dass 1 bzw. 3% eines Kunststoffpulvers gemäss Beispiel 1.1 bis 1.3 in die Schlusslacklösung eingerührt wurden.

An den schlusslackierten Weich-PVC-Schaumkunstledern wurden Glanz und Gleitfähigkeit der lackierten Oberflächen gegeneinander beurteilt.

Es lag der folgende Massstab zugrunde:

| Beurteilung | Glanz | Gleitfähigkeit |
|---|---|---|
| 1 | Hochglanz | Gleiten ohne Widerstand |
| 2 | Glanz | Gleiten mit leichtem Widerstand |
| 3 | leichter Matteffekt | Gleiten mit Widerstand |
| 4 | Matteffekt | kein Gleiten |

Die erzielten Ergebnisse sind in folgender Tabelle zusammengestellt:

| Versuch | Zusatz von Kunststoffpulver | Glanz | Gleitfähigkeit |
|---------|----------------------------|-------|----------------|
| 1 | – | 1 | 4 |
| 2a | 1% gemäss Beispiel 1.1 | 2 | 3 |
| 2b | 3% gemäss Beispiel 1.1 | 3 | 2 |
| 3a | 1% gemäss Beispiel 1.2 | 2–3 | 2 |
| 3b | 3% gemäss Beispiel 1.2 | 4 | 1 |
| 4a | 1% gemäss Beispiel 1.3 | 1–2 | 2 |
| 4b | 3% gemäss Beispiel 1.3 | 2–3 | 1–2 |

## Patentansprüche

1. Kunststoffpulver aus Latexpartikeln mit einer mittleren Teilchengrösse zwischen 1 und 5 µm, die teilweise oder vollständig zu grösseren Partikeln locker aggregiert sein können, bestehend aus einem vernetzten Mischpolymerisat von Acrylatmonomeren, 0,5 bis 10 Gew.-% eines vernetzenden Comonomeren mit wenigstens zwei polymerisierbaren Doppelbindungen und gegebenenfalls einem weiteren Comonomeren dadurch gekennzeichnet, dass die am Aufbau des Mischpolymerisats beteiligten Acrylmonomeren 75 bis 99,5 Gew.-% des Mischpolymerisats bilden und aus einem Monomerengemisch aus Methyl- und Isobutylmethacrylat im Gewichtsverhältnis 1 : 3 bis 3 : 1 bestehen.

2. Beschichtungsmittel mit einem Gehalt an einer flüchtigen flüssigen Komponente, einem filmbildenden Bindemittel und einem partikelförmigen Kunststoff mit einer Teilchengrösse zwischen 1 und 5 µm, dadurch gekennzeichnet, dass der partikelförmige Kunststoff aus Latexpartikeln gemäss Anspruch 1 besteht.

3. Beschichtungsmittel nach Anspruch 2, dadurch gekennzeichnet, dass das Bindemittel ein Acrylharz ist.

4. Beschichtungsmittel nach den Ansprüchen 2 und 3, dadurch gekennzeichnet, dass das Bindemittel in Form einer Lösung in der flüssigen Komponente vorliegt und die Latexpartikel in der Lösung verteilt sind.

5. Beschichtungsmittel nach den Ansprüchen 2 und 3, dadurch gekennzeichnet, dass die flüssige Komponente Wasser ist und das Bindemittel ein darin dispergiertes Emulsionspolymerisat ist.

6. Beschichtungsverfahren zur Erzeugung einer nichtblockenden und nicht klebenden Beschichtung auf einem festen Substrat, durch Beschichten des Substrats mit einem Beschichtungsmittel und Verdampfen der flüchtigen Komponente unter Filmbildung, dadurch gekennzeichnet, dass ein Beschichtungsmittel gemäss den Ansprüchen 2 bis 5 aufgebracht wird.

7. Beschichtungsverfahren nach Anspruch 6, dadurch gekennzeichnet, dass man ein Substrat aus weichmacherhaltigem Polyvinylchlorid beschichtet.

## Claims

1. Plastics powder consisting of latex particles with an average particle size of between 1 and 5 µm, which may be loosely aggregated, either partly or wholly, to form larger particles, consisting of a cross-linked copolymer of acrylate monomers, 0,5 to 10% by weight of a cross-linking comonomer with at least two polymerisable double bonds and optionally another comonomer, characterised in that the acrylic monomers used in the synthesis of the copolymer form 75 to 99,5% by weight of the copolymer and consist of a monomer mixture of methyl and isobutyl methacrylate in a weight ratio of from 1 : 3 ot 3 : 1.

2. Coating agent containing a volatile liquid component, a film-forming binder and a particulate plastics material with a particle size of between 1 and 5 µm, characterised in that the particulate plastics material consists of latex particles according to claim 1.

3. Coating agent as claimed in claim 2, characterised in that the binder is an acrylic resin.

4. Coating agent as claimed in claims 2 and 3, characterised in that the binder is present in the form of a solution in the liquid component and the latex particles are distributed in the solution.

5. Coating agent as claimed in claims 2 and 3, characterised in that the liquid component is water and the binder is an emulsion polymer dispersible therein.

6. Method of coating for producing a non-blocking and non-adhesive coating on a solid substrate, by coating the substrate with a coating agent and evaporating the volatile component, with formation for a film, characterised in that a coating agent according to claims 2 to 5 is applied.

7. Method of coating as claimed in claim 6, characterised in that a substrate of polyvinyl chloride containing plasticiser is coated.

## Revendications

1. Poudre de matière synthétique formée de particules de latex ayant une grosseur moyenne de grains comprise entre 1 et 5 microns, pouvant être agglomérées en partie ou en totalité de façon peu cohérente pour former des particules plus grosses et faites d'un copolymère réticulé d'acrylates monomères, de 0,5 à 10% en poids d'un comonomère réticulant comportant au moins deux doubles liaisons polymérisables et, le cas échéant, d'un autre comonomère, caractérisée en ce que les acrylates monomères entrant dans la constitution du copolymère forment 75 à 99,5% en poids du copolymère et consistent en un mélange de monomères, composé de méthacrylates de méthyle et d'isobutyle dans un rapport pondéral de 1 : 3 à 3 : 1.

2. Produit d'enduction contenant un élément liquide volatil, un liant filmogène et une matière synthétique particulaire ayant une grosseur de grains comprise entre 1 et 5 microns, caractérisé en ce que la matière synthétique particulaire est faite de particules de latex suivant la revendication 1.

3. Produit d'enduction selon la revendication 2, caractérisé en ce que le liant est une résine acrylique.

4. Produit d'enduction selon la revendication 2 ou 3, caractérisé en ce que le liant se présente sous la forme d'une solution dans l'élément liquide et les particules de latex sont dispersées dans la solution.

5. Produit d'enduction selon la revendication 2 ou 3, caractérisé en ce que l'élément liquide est de l'eau et le liant est un produit de polymérisation en émulsion qui y est dispersé.

6. Procédé d'enduction pour la confection d'une couche de revêtement non adhérente au contact entre surface et non collante sur un support solide, par enduction du support avec un produit d'enduction et évaporation de l'élément volatil avec formation d'une pellicule, caractérisé en ce qu'on applique un produit d'enduction selon l'une quelconque des revendications 2 à 5.

7. Procédé d'enduction selon la revendication 6, caractérisé en ce qu'une couche de revêtement est formée sur un support de chlorure de polyvinyle contenant un plastifiant.